# EUROPEAN PATENT APPLICATION

(11) **EP 4 557 724 A1**
(43) Date of publication of application: **21.05.2025**
(21) Application number: 23865673.0
(22) Date of filing: 23.06.2023
(51) Int. Cl.: H04N 13/363, H04N 13/156, H04N 13/122, H04N 9/31

(54) **PROJECTION APPARATUS AND OPERATING METHOD THEREOF**

(30) Priority: 15.09.2022 KR 20220116685; 06.12.2022 KR 20220169109
(71) Applicant: Samsung Electronics Co., Ltd., Suwon-si, Gyeonggi-do 16677 (KR)
(72) Inventor: KIM, Hoseon, Suwon-si, Gyeonggi-do 16677 (KR)
(74) Representative: Appleyard Lees IP LLP
(86) International application number: PCT/KR2023/008725
(87) International publication number: WO 2024/058369

(57) **Abstract**

A projection apparatus for projecting an image, according to an embodiment, may include a projection unit, a memory storing one or more instructions, and at least one processor configured to execute the one or more instructions to obtain spatial information of a space onto which the image is to be projected, obtain position information of a stitching area included in the image, and control the projection unit to project the image according to projection information of the image, which is determined based on the spatial information and the position information of the stitching area.

## Description

### Technical Field

Various embodiments relate to a projection apparatus and operating method thereof capable of providing images with optimal quality.

### Background Art

A 360-degree image is an image having a 360-degree angle of view, and may be generated based on a plurality of images captured in a 360-degree direction by using at least one camera. To generate a 360-degree image, a plurality of captured images may be mapped onto a sphere, and contact points of the mapped images may be connected (stitched) together to generate the 360-degree image. In this case, image distortion or deterioration , such as stitching lines, may occur in portions where the plurality of images are connected.

As a result, when viewing a 360-degree image projected onto a screen or displayed on a display, a viewer may experience image quality deterioration or unnaturalness in a stitching area.

Therefore, when projecting or displaying the 360-degree image on a screen, there is a need for a method that allows a viewer to view the 360-degree image with optimal quality.

### Disclosure of Invention

### Solution to Problem

A projection apparatus for projecting an image, according to an embodiment, may include a projection unit.

According to an embodiment, the projection apparatus may include a memory storing one or more instructions and at least one processor configured to execute the one or more instructions.

The at least one processor may be configured to execute the one or more instructions to obtain spatial information of a space onto which the image is to be projected.

The at least one processor may be configured to execute the one or more instructions to obtain position information of a stitching area included in the 360-degree image.

The at least one processor may be configured to execute the one or more instructions to control the projection unit to project the image according to projection information of the image, which is determined based on the spatial information and the position information of the stitching area.

An operating method of a projection apparatus for projecting an image, according to an embodiment, may include obtaining spatial information of a space onto which the image is to be projected.

According to an embodiment, the operating method of the projection apparatus may include obtaining position information of a stitching area included in the image.

According to an embodiment, the operating method of the projection apparatus may include projecting the image according to projection information of the image, which is determined based on the spatial information and the position information of the stitching area.

### Brief Description of Drawings

FIG. 1 is a diagram illustrating a projection environment according to an embodiment.
FIG. 2 is a diagram illustrating an example in which a 360-degree image is displayed on a screen composed of multiple surfaces, according to an embodiment.
FIGS. 3 and 4 are diagrams illustrating examples in which a projection apparatus receives an input for selecting a view of a 360-degree image from a control device, according to embodiments.
FIG. 5 is a diagram illustrating an operation in which a projection apparatus controls projection of a 360-degree image, according to an embodiment.
FIG. 6 is a flowchart of an operating method of a projection apparatus, according to an embodiment.
FIG. 7 is a diagram illustrating an operation in which a projection apparatus obtains spatial information of a screen, according to an embodiment.
FIG. 8 is a diagram illustrating an operation in which a projection apparatus recognizes a stitching area in a 360-degree image, according to an embodiment.
FIG. 9 is a diagram illustrating an operation in which a projection apparatus controls projection of a 360-degree image, according to an embodiment.
FIG. 10 is a diagram illustrating an operation in which a projection apparatus controls projection of a 360-degree image, according to an embodiment.
FIG. 11 is a diagram illustrating an example in which a projection apparatus projects a guide message, according to an embodiment.
FIG. 12 is a diagram illustrating an operation in which a projection apparatus controls projection of a 360-degree image, according to an embodiment.
FIG. 13 is a flowchart of a method, performed by a projection apparatus, of projecting a 360-degree image, according to an embodiment.
FIG. 14 is a diagram illustrating an operation in which a projection apparatus controls projection of a 360-degree image, according to an embodiment.
FIG. 15 is a block diagram of a configuration of a projection apparatus according to an embodiment.
FIG. 16 is a diagram illustrating a display device for displaying a 360-degree image, according to an embodiment.
FIG. 17 is a diagram illustrating a display device displaying a 360-degree image, according to an embodiment.
FIG. 18 is a diagram illustrating an example in which a display device displays a 360-degree image, according to an embodiment.
FIG. 19 is a block diagram of a configuration of a display device according to an embodiment.

### Mode for the Invention

Terms used in the present specification will now be briefly described and then the present disclosure will be described in detail.

As the terms used herein, general terms that are currently widely used are selected by taking into account functions according to the present disclosure, but the terms may vary according to the intention of one of ordinary skill in the art, precedent cases, advent of new technologies, etc. Furthermore, specific terms may be arbitrarily selected by the applicant, and in this case, the meaning of the selected terms will be described in detail in the detailed description of the present disclosure. Thus, the terms used in the present disclosure should be defined not by simple appellations thereof but based on the meaning of the terms together with the overall description of the present disclosure.

Throughout the specification, when a part "includes" or "comprises" an element, unless there is a particular description contrary thereto, it is understood that the part may further include other elements, not excluding the other elements. In addition, terms such as "portion", "module", etc., described in the specification refer to a unit for processing at least one function or operation and may be implemented as hardware or software, or a combination of hardware and software.

Embodiments will be described more fully hereinafter with reference to the accompanying drawings so that they may be easily implemented by one of ordinary skill in the art. However, the present disclosure may be implemented in different forms and should not be construed as being limited to embodiments set forth herein. In addition, parts not related to descriptions of the present disclosure are omitted to clearly explain the present disclosure in the drawings, and like reference numerals denote like elements throughout.

In an embodiment of the specification, the term "user" refers to a person who controls a system, a function, or an operation, and may include a developer, an administrator, or an installation technician.

In addition, in an embodiment of the present specification, an 'image' or a 'picture' may refer to a still image, or a moving picture composed of a plurality of consecutive still images (or frames), or a video.

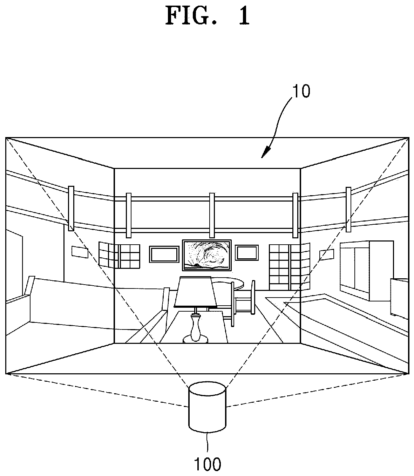

FIG. 1 is a diagram illustrating a projection environment according to an embodiment.

Referring to FIG. 1, a projection apparatus 100 according to an embodiment may perform projection in a 360-degree direction. For example, the projection apparatus 100 may project an image onto a screen 10. Here, the screen 10 may refer to an area, space, or the like on which an image output from the projection apparatus 100 is displayed. As shown in FIG. 1, the projection apparatus 100 may project an image onto the screen 10 composed of multiple surfaces (e.g., front surface, sides, ceiling, floor, etc.). However, the present disclosure is not limited thereto, and a space where an image is projected may be configured in various forms.

In addition, according to an embodiment, the projection apparatus 100 may project an image on only some of a plurality of surfaces constituting the screen 10. For example, the projection apparatus 100 may project an image only on the front surface of the screen 10. However, the present disclosure is not limited thereto.

According to an embodiment, the projection apparatus 100 may project a wide image, such as a 360-degree image or a panorama. A 360-degree image may refer to an image having a 360-degree angle of view. For example, a 360-degree image may be generated by connecting (stitching) together images captured by each of a plurality of cameras. In this case, when the plurality of images are connected together, an unnatural portion may occur in a connected area.

Such an area where a plurality of images are connected may be referred to as a "stitching area," and distortion or deterioration of the image, such as marks (stitching lines) at portions where the different images are connected, may occur in the stitching area. As a result, when watching a 360-degree image, a viewer may experience image quality deterioration or unnaturalness in a stitching area.

According to an embodiment, when projecting a 360-degree image onto the screen 10, the projection apparatus 100 may control a stitching area included in the 360-degree image to be projected onto an edge region of the screen 10. Accordingly, a viewer or user may feel less unnatural about discontinuous portions of the image compared to when the discontinuous portions of the image is projected onto a planar surface. Thus, the viewer or user may view the 360-degree image with improved quality.

A method, performed by the projection apparatus 100, of projecting a 360-degree image, according to an embodiment, is described in detail with reference to the following drawings.

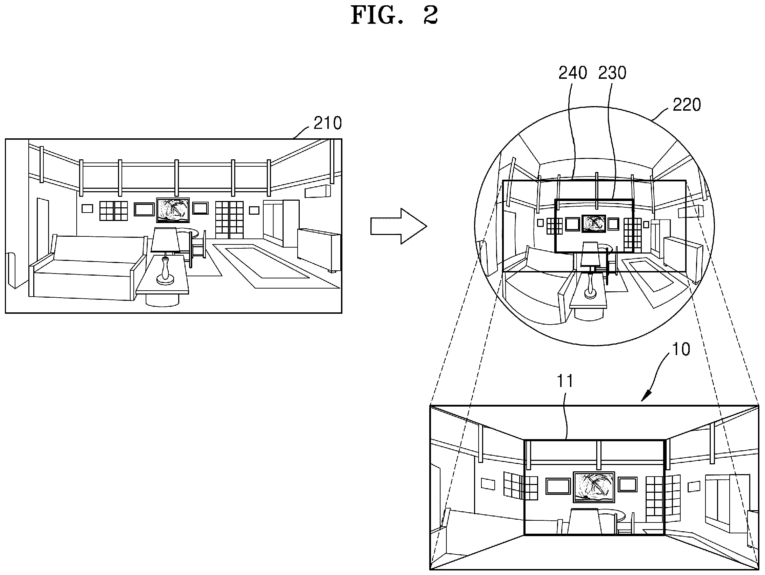

FIG. 2 is a diagram illustrating an example in which a 360-degree image is displayed on a screen composed of multiple surfaces, according to an embodiment.

Referring to FIG. 2, according to an embodiment, a 360-degree image is generated as a 360-degree image in a spherical format (hereinafter, spherical 360-degree image), but needs to be converted into a 360-degree image 210 in a planar format (hereinafter, the planar 360-degree image 210) in order to be transmitted to or stored in another device. For example, according to an embodiment, the projection apparatus 100 may receive a 360-degree image generated by an external device as the planar 360-degree image 210. Alternatively, the projection apparatus 100 may store the 360-degree image as the planar 360-degree image 210.

The projection apparatus 100 may convert the planar 360-degree image 210 into a spherical 360-degree image 220 by performing graphical processing on the planar 360-degree image 210. When a region 230 or 240 of the spherical 360-degree image 220 is selected, the projection apparatus 100 may project an image corresponding to the selected region 230 or 240 onto the screen 10.

For example, referring to FIG. 2, the projection apparatus 100 may receive a user input for selecting a projection region. In this case, when receiving a user input for selecting the first region 230, the projection apparatus 100 may control a 360-degree image corresponding to the first region 230 to be projected onto a front surface 11 of the screen 10 and control a 360-degree image corresponding to a surrounding region of the first region 230 to be projected onto the sides, ceiling, and floor of the screen 10.

Alternatively, when receiving a user input for selecting the second region 240, the projection apparatus 100 may control a 360-degree image corresponding to the second region 240 to be projected entirely onto the screen 10 including the front surface, sides, ceiling, and floor. However, the present disclosure is not limited thereto.

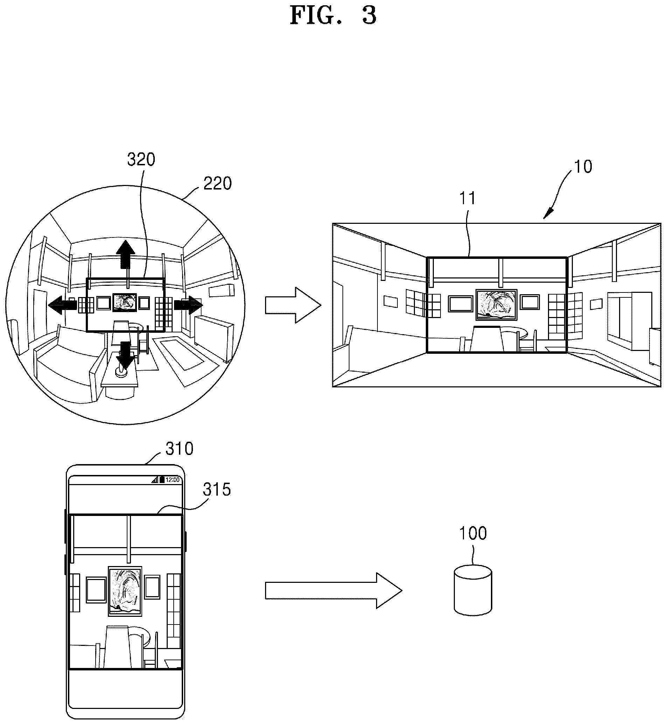

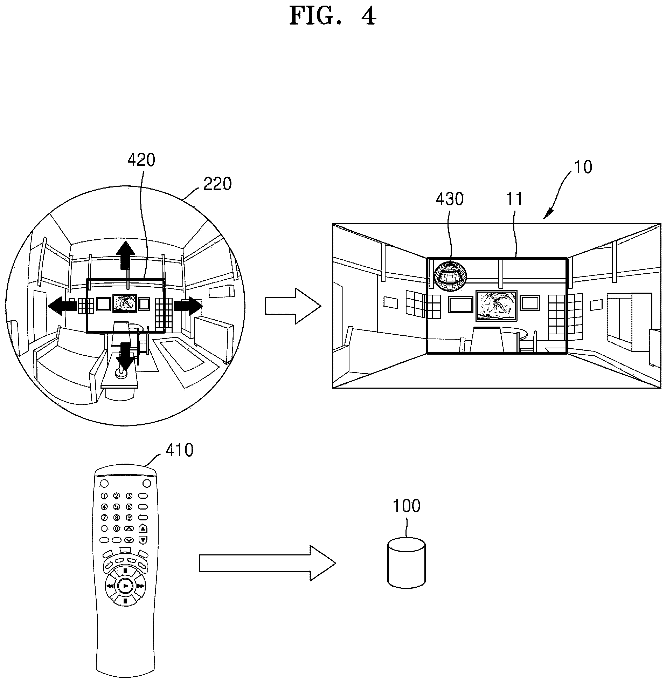

A user input for selecting the first region 230 or the second region 240 is described in more detail with reference to FIGS. 3 and 4.

FIGS. 3 and 4 are diagrams illustrating examples in which a projection apparatus receives an input for selecting a view of a 360-degree image from a control device, according to embodiments.

Referring to FIG. 3, according to an embodiment, the projection apparatus 100 may receive from a control device an input for selecting a view of a 360-degree image to be projected on a screen 10.

For example, a first control device 310 illustrated in FIG. 3 may be a device including a display 315. By using the first control device 310, a user may select a region 320 to be projected onto the front surface 11 of the screen 10 from the spherical 360-degree image 220. The first control device 310 may display the selected projection region 320 on the display 315. For example, the user may select a region to be projected on the front surface 11 of the screen 10 by moving a position of the selected region 320 within the spherical 360-degree image 220, such as an input via 4-way keys on the first control device 310 or an input for touching and dragging an image displayed on the display 315.

According to an embodiment, the projection apparatus 100 may control an image corresponding to the selected region 320 to be projected onto the front surface 11 of the screen 10, and control an image corresponding to a surrounding region of the selected region 320 to be projected onto the sides, ceiling, and floor of the screen 10.

Also, referring to FIG. 4, a second control device 410 illustrated in FIG. 4 may be a device that does not include a display. By using the second control device 410, the user may select a region 420 to be projected onto the front surface 11 of the screen 10 from the spherical 360-degree image 220.

In this case, the projection apparatus 100 may control a three-dimensional (3D) indicator 430 indicating a location of the selected region 420 in the spherical 360-degree image 220 to be projected on the front surface 11 of the screen 10. Accordingly, the user may easily recognize the location of the selected region 420 within the 360-degree image.

According to an embodiment, the projection apparatus 100 may control an image corresponding to the selected region 420 to be projected onto the front surface 11 of the screen 10, and control an image corresponding to a surrounding region of the selected region 420 to be projected onto the sides, ceiling, and floor of the screen 10.

Moreover, FIGS. 3 and 4 illustrates and describes an example in which a region to be projected onto the front surface 11 of the screen 10 is selected, but are not limited thereto. According to an embodiment, the projection apparatus 100 may also receive from the control device 310 or 410 an input for selecting an region to be projected onto the entire screen 10 including the front surface, sides, ceiling, and floor.

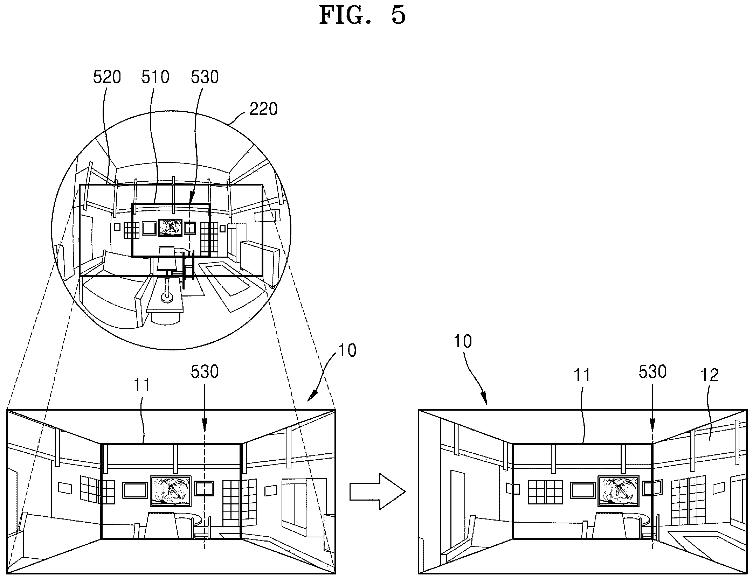

FIG. 5 is a diagram illustrating an operation in which a projection apparatus controls projection of a 360-degree image, according to an embodiment.

Referring to FIG. 5, a 360-degree image corresponding to a selected region (a region 510 to be projected on the front surface 11 of the screen 10 or a region 520 to be projected on the entire screen 10) may include a stitching area 530.

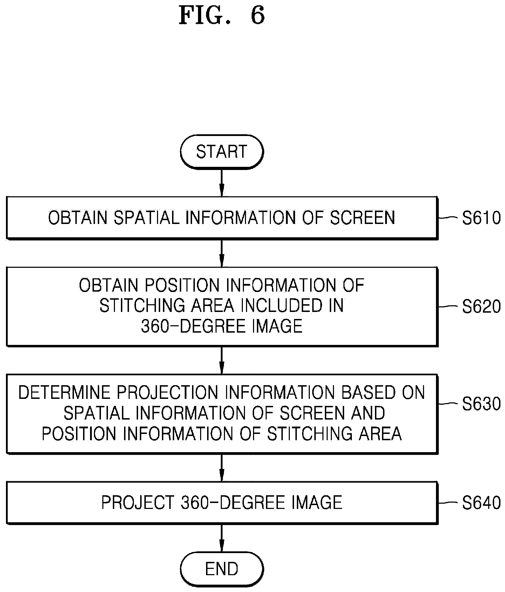

According to an embodiment, the projection apparatus 100 may control projection of the 360-degree image so that the stitching area 530 is located at an edge included in the screen 10. For example, when the stitching area 530 is located on the front surface 11 of the screen 10, the projection apparatus 100 may adjust a projection size, a projection position, a projection direction, etc. of the 360-degree image so that the stitching area 530 is located at a boundary edge between the front surface 11 and a side 12 of the screen 10. A method, performed by the projection apparatus 100, of controlling projection of a 360-degree image, according to an embodiment, is described in detail with reference to FIGS. 6 to 13.

FIG. 6 is a flowchart of an operating method of a projection apparatus, according to an embodiment.

Referring to FIG. 6, according to an embodiment, the projection apparatus 100 may obtain spatial information of a screen onto which a 360-degree image is to be projected (S610).

For example, the projection apparatus 100 may obtain spatial information of the screen or surroundings thereof by using an image sensor and a depth sensor. The projection apparatus 100 may obtain an image of the screen or surrounding space thereof captured by the image sensor, and obtain depth information of the screen or surrounding space from the depth sensor. The projection apparatus 100 may obtain spatial information of the screen or surrounding space based on the captured image and depth information.

The spatial information of the screen may include a shape of the screen, information about a distance to each of a plurality of surfaces included in the screen from a projector, depth information of the space, position information about edges (boundaries) between the plurality of surfaces included in the screen, etc.

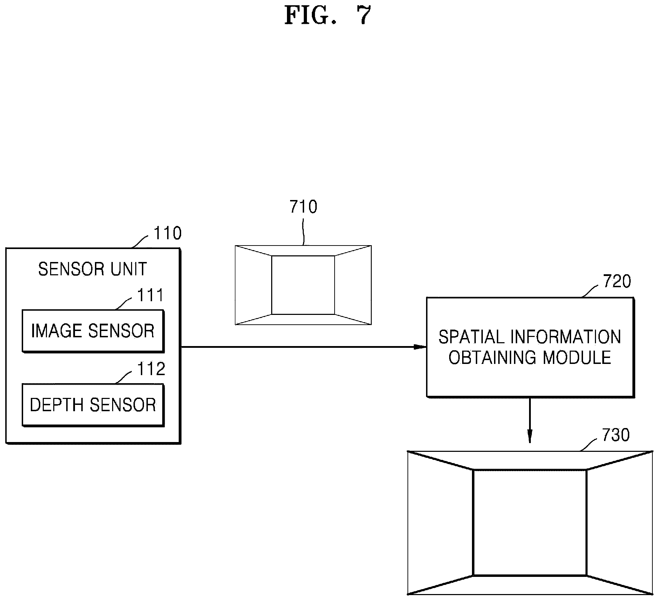

For example, the projection apparatus 100 may recognize edges where different planes intersect based on the captured image and depth information, and obtain position information of the recognized edges. This is described in detail with reference to FIG. 7.

According to an embodiment, the projection apparatus 100 may obtain position information of a stitching area included in the 360-degree image to be projected (S620).

According to an embodiment, the projection apparatus 100 may receive or prestore a 360-degree image from an external device.

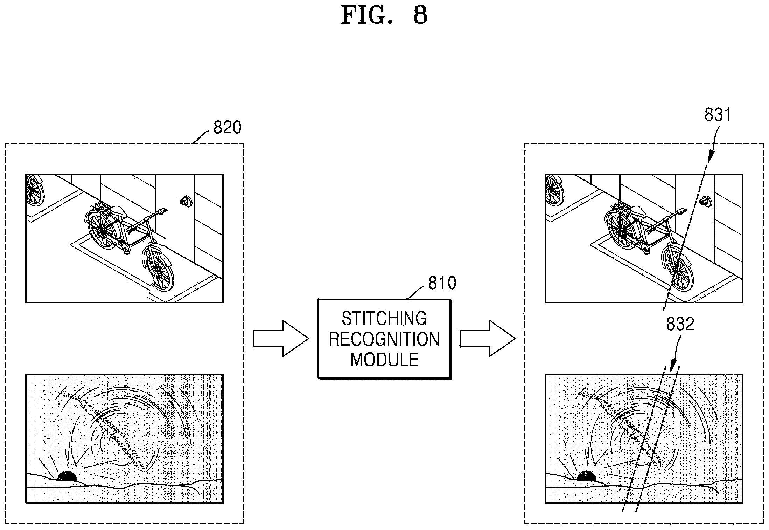

Based on metadata about the 360-degree image, the projection apparatus 100 may obtain position information of a stitching area included in the 360-degree image. Alternatively, the projection apparatus 100 may identify a stitching area included in the 360-degree image by analyzing the 360-degree image and obtain position information about the stitching area. This is described in detail with reference to FIG. 8.

According to an embodiment, the projection apparatus 100 may determine projection information of the 360-degree image, based on the spatial information of the screen and the position information of the stitching area (S630).

Based on the spatial information of the screen obtained in operation S610, in particular, the position information of the edges included in the screen, and the position information of the stitching area obtained in operation S620, the projection apparatus 100 may determine a region of the 360-degree image to be projected, a projection direction, a projection position, a projection size, etc., so that the stitching area included in the 360-degree image is projected onto an edge of the screen.

According to an embodiment, the projection apparatus 100 may control the 360-degree image to be projected according to the determined projection information (S640).

Accordingly, the stitching area included in the 360-degree image may be projected onto an edge of the screen, and a user or viewer may perceive less deterioration of the stitching area than is actually present .

FIG. 7 is a diagram illustrating an operation in which a projection apparatus obtains spatial information of a screen, according to an embodiment.

Referring to FIG. 7, according to an embodiment, the projection apparatus 100 may include a sensor unit 110, and the sensor unit 110 may include an image sensor 111 and a depth sensor 112. However, the sensor unit 112 is not limited thereto and may further include a direction sensor, an illuminance sensor, etc. The image sensor 111 may include at least one camera, and obtain an image 710 captured of a space included in a field of view (FOV) of the camera.

The depth sensor 112 may include at least one camera, and obtain depth information about a real-world space included in the FOV of the camera. For example, the depth sensor 112 may sense a distance between the projection apparatus 100 and a projection surface included in the screen, a distance between the projection apparatus 100 and an object, etc.

According to an embodiment, the projection apparatus 100 may include a spatial information obtaining module 720. The spatial information obtaining module 720 may be a module that performs a function of obtaining spatial information of the screen. According to an embodiment, the spatial information obtaining module 720 may include appropriate logic, circuitry, interfaces, and/or code that enable obtaining of spatial information of the screen.

The spatial information obtaining module 720 may obtain spatial information of the screen, based on at least one of the image 710 captured by the image sensor 111 and the depth information obtained by the depth sensor 112.

For example, the spatial information obtaining module 720 may obtain information about a shape, characteristics, a size, a location, etc. of the screen. Furthermore, when the screen is composed of a plurality of planes, the spatial information obtaining module 720 may recognize at least one edge where the plurality of planes intersect, and obtain position information 730 of the recognized edge. However, the present disclosure is not limited thereto.

In addition, the spatial information obtaining module 720 may obtain spatial information of the screen by analyzing at least one of the image 710 captured by the image sensor 111 and the depth information obtained by the depth sensor 112, wherein the analyzing is performed by using at least one of machine learning, a neural network, or a deep learning algorithm as a rule-based or artificial intelligence (AI) algorithm. For example, the spatial information obtaining module 720 may recognize edges included in the screen by using a neural network trained to recognize edges from an image of a space or depth information about the space. However, the present disclosure is not limited thereto.

FIG. 8 is a diagram illustrating an operation in which a projection apparatus recognizes a stitching area in a 360-degree image, according to an embodiment. Referring to FIG. 8, according to an embodiment, the projection apparatus 100 may include a stitching recognition module 810. The stitching recognition module 810 may be a module that performs a function of recognizing a stitching area included in a 360-degree image 820 to be projected. According to an embodiment, the stitching recognition module 810 may include appropriate logic, circuitry, interfaces, and/or code that enable recognition of a stitching area in the 360-degree image 820.

For example, the stitching recognition module 810 may recognize a stitching area 831 or 832 based on pixel values of pixels included in the 360-degree image 820. The stitching recognition module 820 may recognize the stitching area 831 or 832 by analyzing a distribution of the pixel values of the pixels included in the 360-degree image 820. The stitching recognition module 810 may determine whether a change in pixel values included in the 360-degree image 820 is greater than or equal to a threshold, whether the 360-degree image 820 contains a discontinuous boundary, whether a gradient processed area exists, etc., and may recognize the stitching area 831 or 832 in the image accordingly.

Furthermore, the stitching recognition module 810 may recognize a stitching area by analyzing the 360-degree image 820 by using at least one of machine learning, a neural network, or a deep learning algorithm as a rule-based or Al algorithm.

In addition, the stitching recognition module 810 may recognize a stitching area based on metadata about the 360-degree image. However, the present disclosure is not limited thereto.

When the stitching area is recognized, the stitching recognition module 810 may obtain position information about the stitching area.

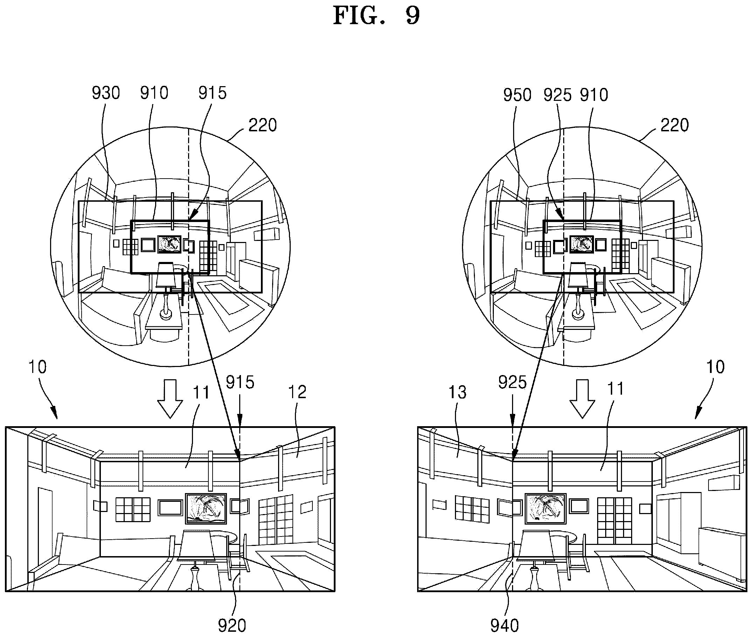

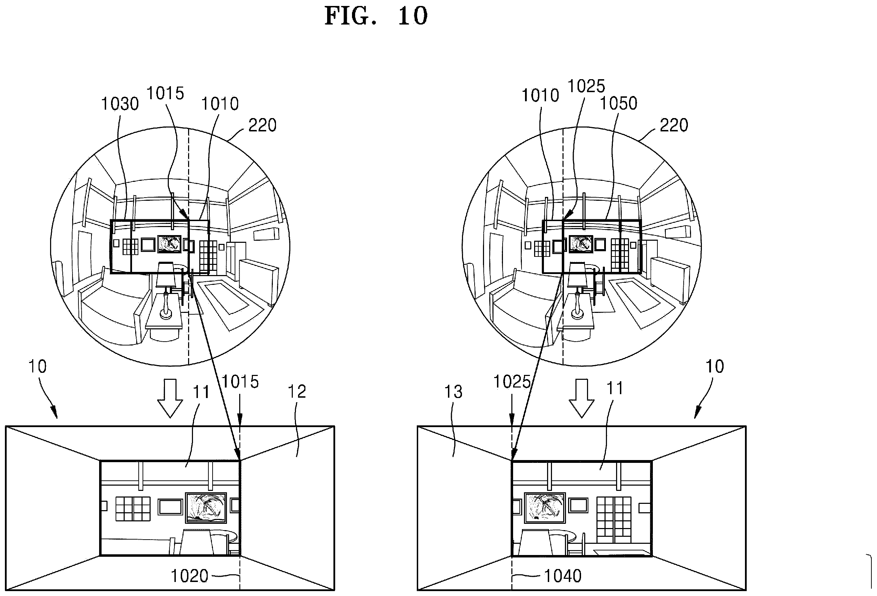

According to an embodiment, the projection apparatus 100 may control projection of a 360-degree image based on spatial information of a screen and position information of a stitching area. This is described in detail with reference to FIGS. 9 and 10.

FIG. 9 is a diagram illustrating an operation in which a projection apparatus controls projection of a 360-degree image, according to an embodiment.

Referring to FIG. 9, according to an embodiment, the projection apparatus 100 may control projection of a 360-degree image so that a stitching area included in the 360-degree image is displayed at an edge included in a screen.

For example, the projection apparatus 100 may receive a user input for selecting a first region 910 from the spherical 360-degree image 220 as a front view. When a stitching area 915 included in the first region 910 is located on a right side within the first region 910, the projection apparatus 100 may project a 360-degree image so that the stitching area 915 included in the first region 910 is located at a first edge 920 between the front surface 11 and a right side 12. Accordingly, the 360-degree image corresponding to the second region 930 including the first region 910 may be projected onto the front surface 11, sides, ceiling, and floor included in the screen 10.

Alternatively, when a stitching area 925 included in the first region 910 is located on a left side within the first region 910, the projection apparatus 100 may project a 360-degree image so that the stitching area 925 included in the first region 910 is located at a second edge 940 between the front surface 11 and a left side 13. Accordingly, the 360-degree image corresponding to the third region 950 including the first region 910 may be projected onto the front surface, sides, ceiling, and floor included in the screen 10.

Because the projection apparatus 100 projects a stitching area onto an edge of the screen 10, the user or viewer may perceive less deterioration of the stitching area than is actually present when watching a 360-degree image displayed on the screen 10.

FIG. 10 is a diagram illustrating an operation in which a projection apparatus controls projection of a 360-degree image, according to an embodiment.

Referring to FIG. 10, according to an embodiment, the projection apparatus 100 may control projection of a 360-degree image so that a stitching area included in the 360-degree image is displayed at an edge included in a screen.

For example, the projection apparatus 100 of FIG. 10 may project a 360-degree image only on the front surface 11 among the plurality of surfaces included in the screen 10. In this case, the projection apparatus 100 may receive a user input for selecting a first region 1010 from the spherical 360-degree image 220 as a front view. When a stitching area 1015 included in the first region 1010 is located on a right side within the first region 1010, the projection apparatus 100 may project a 360-degree image so that the stitching area 1015 included in the first region 1010 is located at a first edge 1020 between the front surface 11 and the right side 12.

Accordingly, the 360-degree image corresponding to a second region 1030, which includes a portion of the first region 1010 (a left portion of the stitching area 1015 within the first region 1010), may be projected onto the front surface 11 of the screen 10.

Alternatively, when a stitching area 1025 included in the first region 1010 is located on a left side within the first region 1010, the projection apparatus 100 may project a 360-degree image so that the stitching area 1025 included in the first region 1010 is located at a second edge 1040 between the front surface 11 and the left side 13. Accordingly, the 360-degree image corresponding to a third region 1050, which includes a portion of the first region 1010 (a right portion of the stitching area 1025 within the first region 1010), may be projected onto the front surface 11 of the screen 10.

Because the projection apparatus 100 projects a stitching area onto an edge of the screen, the user or viewer may perceive less deterioration of the stitching area than is actually present when watching a 360-degree image displayed on the screen.

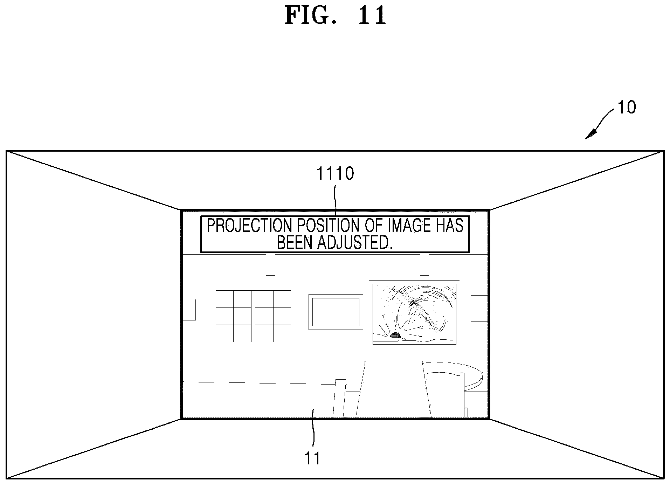

FIG. 11 is a diagram illustrating an example in which a projection apparatus projects a guide message, according to an embodiment.

Referring to FIG. 11, according to an embodiment, the projection apparatus 100 may project a guide message on a screen when a region of a 360-degree image to be projected, a projection size, a projection position, a projection direction, etc. are automatically adjusted according to a position of a stitching area, as illustrated and described in FIGS. 9 or 10.

For example, when the projection apparatus 100 has adjusted a projection position to project a stitching area onto an edge included in the screen, the projection apparatus 100 may project, onto the front surface 11 of the screen 10, a guide message 1110 indicating that the projection position of the image has been adjusted. However, the present disclosure is not limited thereto.

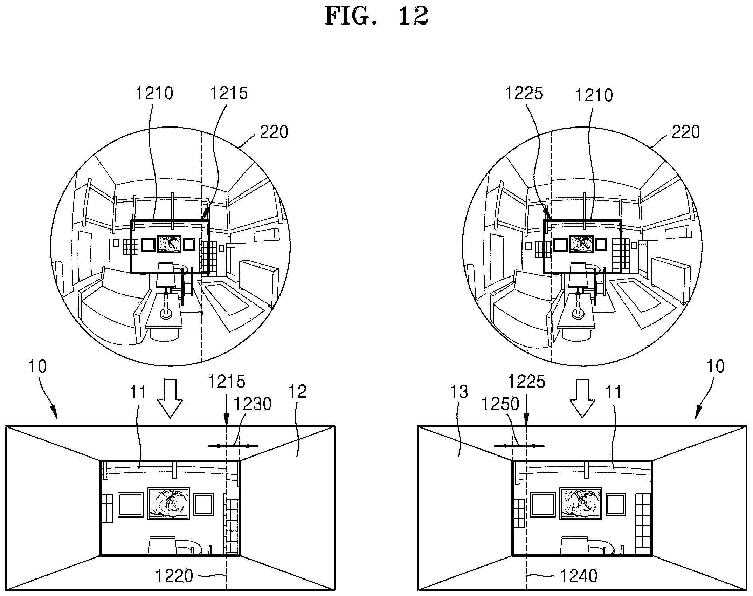

FIG. 12 is a diagram illustrating an operation in which a projection apparatus controls projection of a 360-degree image, according to an embodiment.

Referring to FIG. 12, when a stitching area included in a 360-degree image is projected close to an edge included in a screen, according to an embodiment, the projection apparatus 100 may project the 360-degree image without adjusting a direction or position of the projection or a region to be projected.

For example, the projection apparatus 100 of FIG. 12 may project a 360-degree image only on the front surface 11 among the plurality of surfaces included in the screen 10. In this case, the projection apparatus 100 may receive a user input for selecting a first region 1210 from the spherical 360-degree image 220 as a front view.

When a 360-degree image corresponding to the first region 1210 is projected onto the front surface 11 of the screen 10, and a distance 1230 between a position at which a stitching area 1215 included in the first region 1210 is projected and a first edge 1220 between the front surface 11 and the right side 12 is less than a threshold, the projection apparatus 100 may project the 360-degree image corresponding to the first region 1210 onto the front surface 11 of the screen 10 without adjusting or changing projection information.

Alternatively, when the 360-degree image corresponding to the first region 1210 is to be projected onto the front surface 11 of the screen 10, and a distance 1250 between a position at which a stitching area 1225 included in the first region 1210 is projected and a second edge 1240 between the front surface 11 and the left side 12 of the screen 10 is less than a threshold, the projection apparatus 100 may project the 360-degree image corresponding to the first region 1210 onto the front surface 11 of the screen 10 without adjusting or changing projection information. However, the present disclosure is not limited thereto.

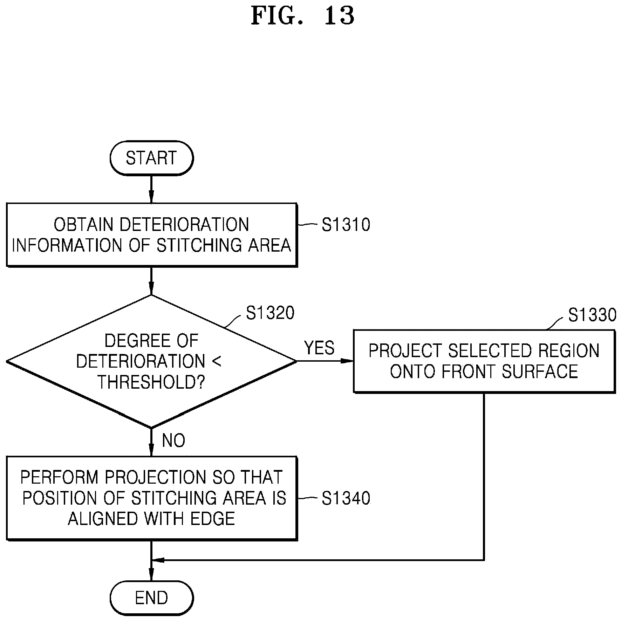

FIG. 13 is a flowchart of a method, performed by a projection apparatus, of projecting a 360-degree image, according to an embodiment.

Referring to FIG. 13, according to an embodiment, the projection apparatus 100 may obtain deterioration information of a stitching area included in a 360-degree image (S1310).

For example, the projection apparatus 100 may recognize a stitching area included in a 360-degree image and obtain deterioration information of the stitching area. The projection apparatus 100 may evaluate a degree of deterioration of the stitching area by analyzing a difference in image quality between the stitching area and other areas, a degree of distortion of the stitching area, etc. However, the present disclosure is not limited thereto.

The projection apparatus 100 may compare a degree of deterioration of the stitching area with a threshold (S1320), and when the degree of deterioration is less than the threshold, project a 360-degree image without considering the stitching area. For example, as described with reference to FIG. 12, even when the stitching area is included in a region selected by the user, the projection apparatus 100 may perform projection so that the selected region is located on the front surface of the screen (S1330). In addition, the projection apparatus 100 may not adjust the direction, position, or the like of the projection of the 360-degree image so that the stitching area is projected onto an edge included in the screen.

When the degree of deterioration is greater than or equal to the threshold, the projection apparatus 100 may adjust the direction, position, or the like of the projection so that the stitching area is projected onto an edge included in the screen (S1340).

For example, as described with reference to FIGS. 9 and 10, when a stitching area is included in a region selected by the user, the projection apparatus 100 may project a 360-degree image so that the stitching area is located at a first edge or a second edge included in the screen. Because this has been described in detail with reference to FIGS. 9 and 10, descriptions already provided above will be omitted.

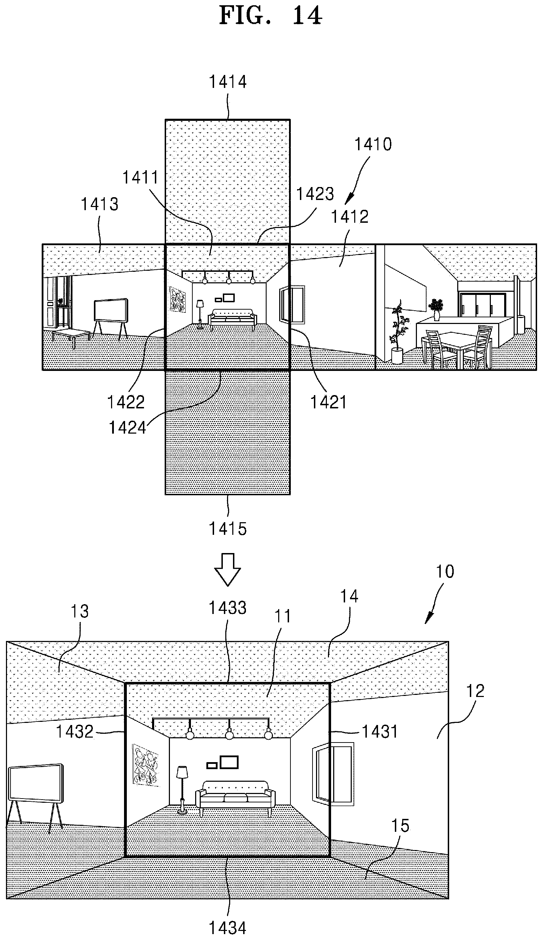

FIG. 14 is a diagram illustrating an operation in which a projection apparatus controls projection of a 360-degree image, according to an embodiment.

Referring to FIG. 14, according to an embodiment, a 360-degree image may be converted into a cubemap image 1410 in a cubemap format having six faces. For example, the cubemap image 1410 may be represented in the form of a development figure of a cube, and may be in the form of six images connected together.

The projection apparatus 100 may receive a user input for selecting a first image 1411 from the cubemap image 1410 as a front view. The projection apparatus 100 may project the cubemap image 1410 so that a boundary 1421 between the first image 1411 and a second image 1412 adjacent to a right side of the first image 1411 is located at a first edge 1431 between the front surface 11 and the right side 12. Furthermore, the projection apparatus 100 may project the cubemap image 1410 so that a boundary 1422 between the first image 1411 and a third image 1413 adjacent to a left side of the first image 1411 is located at a second edge 1432 between the front surface 11 and the left side 13.

Furthermore, the projection apparatus 100 may project the cubemap image 1410 so that a boundary 1423 between the first image 1411 and a fourth image 1414 adjacent to a top of the first image 1411 is located at a third edge 1433 between the front surface 11 and a ceiling surface 14.

Furthermore, the projection apparatus 100 may project the cubemap image 1410 so that a boundary 1424 between the first image 1411 and a fifth image 1415 adjacent to a bottom of the first image 1411 is located at a fourth edge 1434 between the front surface 11 and a floor surface 15.

By allowing the projection apparatus 100 to project the boundaries between the plurality of images included in the cubemap image 1410 to align with the edges of the space, the viewer or user may feel unnatural about discontinuous portions in the image.

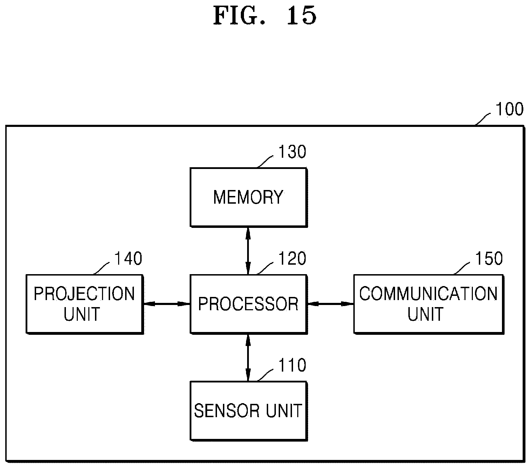

FIG. 15 is a block diagram of a configuration of a projection apparatus according to an embodiment.

Referring to FIG. 15, a projection apparatus 100 according to an embodiment may include a sensor unit 110, a processor 120, a memory 130, a projection unit 140, and a communication unit 150.

According to an embodiment, the sensor unit 110 may detect conditions around the projection apparatus 100 and transmit information about the detected conditions to the processor 120. The sensor unit 110 may include an image sensor and a depth sensor.

According to an embodiment, the image sensor may obtain image frames, such as still images or moving images. For example, the image sensor may capture an image of an outside of the projection apparatus 100. In this case, the image captured by the image sensor may be processed by the processor 120 or a separate image processor.

According to an embodiment, the depth sensor may obtain depth information about one or more objects included in a space. The depth information may correspond to a distance from the depth sensor to a particular object, and the greater the distance from the depth sensor to the particular object, the greater the depth value. According to an embodiment, the depth sensor may obtain depth information of an object in various ways, and for example, may obtain the depth information by using at least one of a time-of-flight (ToF) method, a stereo image method, and a structured light method.

According to an embodiment, the depth sensor may include at least one camera, and obtain depth information about a real-world space included in a FOV of the camera included in the depth sensor.

The sensor unit 110 may further include, in addition to the image sensor and the depth sensor, an acceleration sensor, a position sensor, a temperature/humidity sensor, an illuminance sensor, a geomagnetic sensor, a gyroscope sensor, and a microphone. However, the present disclosure is not limited thereto.

According to an embodiment, the processor 120 controls all operations of the projection apparatus 100 and a flow of signals between the internal components of the projection apparatus 100, and performs a function of processing data.

The processor 120 may include a single core, a dual core, a triple core, a quad core, and a number of cores equal to multiples thereof. Furthermore, the processor 120 may include a plurality of processors. For example, the processor 120 may be implemented as a main processor (not shown) and a sub processor (not shown).

In addition, the processor 120 may include at least one of a central processing unit (CPU), a graphics processing unit (GPU), and a video processing unit (VPU). Alternatively, according to an embodiment, the processor 120 may be implemented as a system on chip (SoC) that integrates at least one of a CPU, a GPU, and a VPU. Alternatively, the processor 120 may further include a neural processing unit (NPU).

According to an embodiment, the memory 130 may store various pieces of data, programs, or applications for driving and controlling the projection apparatus 100.

Also, a program stored in the memory 130 may include one or more instructions. A program (one or more instructions) or an application stored in the memory 130 may be executed by the processor 120.

According to an embodiment, the processor 120 may execute one or more instructions stored in the memory 130 to obtain spatial information of a screen onto which an image is to be projected. The processor 120 may obtain an image of the screen captured by the image sensor, and obtain depth information about the screen from the depth sensor.

The processor 120 may obtain spatial information of the screen, based on the image captured by the image sensor and the depth information obtained from the depth sensor. For example, the processor 120 may obtain information about a shape, characteristics, a size, a location, etc. of the screen. Furthermore, when the screen is composed of a plurality of faces, the processor 120 may recognize an edge between the plurality of faces, and obtain position information of the recognized edge. However, the present disclosure is not limited thereto.

Furthermore, the processor 120 may obtain spatial information of the screen by analyzing at least one of the image captured by the image sensor and the depth information obtained by the depth sensor, using at least one of machine learning, a neural network, or a deep learning algorithm as a rule-based or Al algorithm.

For example, the processor 120 may recognize edges included in the screen by using a neural network trained to recognize edges from an image of the space or depth information about the space. However, the present disclosure is not limited thereto.

According to an embodiment, a neural network may be a network trained by learning various criteria, conditions, etc. for recognizing edges in the space, based on various training data. In this case, 'training' may refer to training the neural network to, when various pieces of collected data are input to the neural network, discover or learn on its own a method of analyzing the pieces of input data, a method capable of recognizing edges included in the space based on the pieces of input data, etc. Accordingly, the trained neural network is capable of recognizing the edges included in the space. In this case, the trained neural network may be prestored in the projection apparatus 100 and may be periodically updated through communication with an external server.

According to an embodiment, the processor 120 may execute one or more instructions stored in the memory 130 to obtain position information of a stitching area included in a 360-degree image to be projected.

The processor 120 may receive or prestore a 360-degree image from an external device. Based on metadata about the 360-degree image, the processor 120 may obtain position information of a stitching area included in the 360-degree image. Furthermore, the processor 120 may identify a stitching area included in the 360-degree image by analyzing the 360-degree image and obtain position information about the stitching area.

For example, the processor 120 may recognize a stitching area based on pixel values of pixels included in the 360-degree image. The processor 120 may recognize the stitching area by analyzing a distribution of the pixel values of the pixels included in the 360-degree image. The processor 120 may determine whether a change in pixel values included in the 360-degree image is greater than or equal to a threshold, whether the 360-degree image contains a discontinuous boundary, whether a gradient processed area exists, etc., and recognize the stitching area accordingly.

Furthermore, the processor 120 may recognize a stitching area by analyzing the 360-degree image by using at least one of machine learning, a neural network, or a deep learning algorithm as a rule-based or Al algorithm.

According to an embodiment, a neural network may be a network trained by learning various criteria, conditions, etc. for recognizing a stitching area, based on various training data. In this case, 'training' may refer to training the neural network to, when various pieces of collected data are input to the neural network, discover or learn on its own a method of analyzing the pieces of input data, a method capable of determining a stitching area based on the pieces of input data, etc. Accordingly, the trained neural network is capable of recognizing the stitching area. In this case, the trained neural network may be prestored in the projection apparatus 100 and may be periodically updated through communication with an external server.

When the stitching area is recognized in the 360-degree image, the processor 120 may obtain position information about the stitching area.

According to an embodiment, the processor 120 may execute one or more instructions stored in the memory 130 to control projection of the 360-degree image based on spatial information of the screen and position information of the stitching area.

The processor 120 may determine projection information including a region of the 360-degree image to be projected, a projection direction, a projection position, a projection size, etc., so that the stitching area included in the 360-degree image is projected onto an edge included in the screen.

The processor 120 may control the projection unit 140 to project the 360-degree image according to the determined projection information.

According to an embodiment, the projection unit 140 may include a light source for generating light, a lens, etc., and may further include a driving unit for adjusting a direction, position, angle, or the like of projection. The projection unit 140 may perform projection of the 360-degree image by driving the light source or adjusting the direction, position, angle, etc. of the projection according to a control signal received from the processor 120.

In addition, the projection apparatus 100 may further include an device driving unit that is capable of moving the projection apparatus 100. The device driving unit may move or rotate a body of the projection apparatus 100 forward or backward, or left or right. However, the present disclosure is not limited thereto.

According to an embodiment, the communication unit 150 may transmit or receive data or signals to or from an external device or a server. For example, the communication unit 150 may include a Wi-Fi module, a Bluetooth module, an infrared communication module, a wireless communication module, a local area network (LAN) module, an Ethernet module, a wired communication module, etc. In this case, each communication module may be implemented in the form of at least one hardware chip.

The Wi-Fi module and the Bluetooth module perform communications according to a Wi-Fi method and a Bluetooth method, respectively. When the Wi-Fi module or the Bluetooth module are used, various types of connection information such as a service set identifier (SSID) and a session key may be first transmitted and received, a communication connection may be established using the connection information, and then various types of information may be transmitted and received. The wireless communication module may include at least one communication chip for performing communication according to various communication standards such as ZigBee, 3rd generation (3G), 3rd Generation Partnership Project (3GPP), long-term evolution (LTE), LTE Advanced (LTE-A), 4th generation (4G), 5th generation (5G), etc.

According to an embodiment, the communication unit 150 may receive a 360-degree image from an external device. Furthermore, according to an embodiment, the communication unit 150 may perform communication with a control device. The communication unit 150 may receive, from the control device, a signal corresponding to a user input for selecting a region of a spherical 360-degree image to be projected.

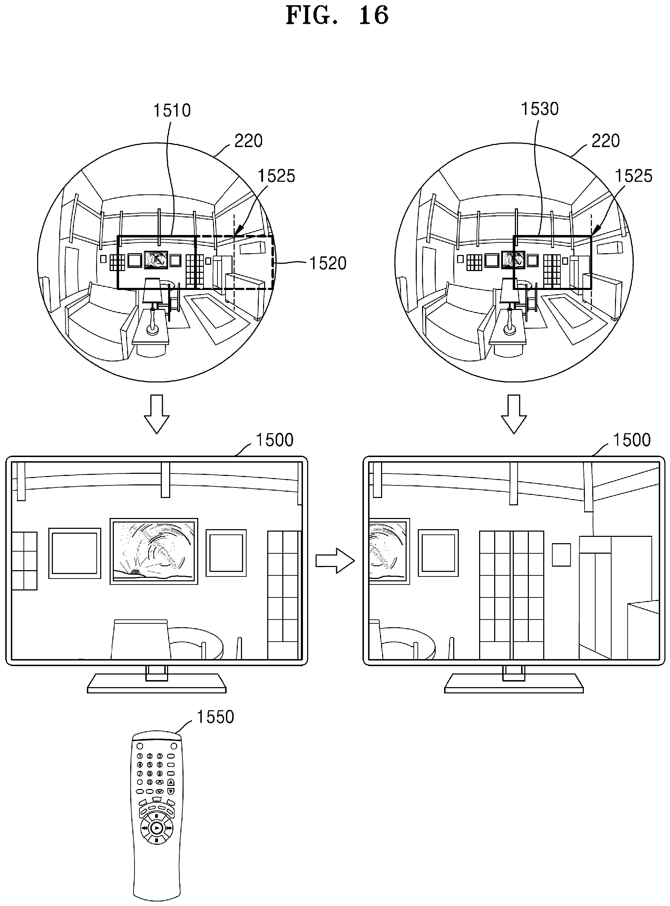

FIG. 16 is a diagram illustrating a display device for displaying a 360-degree image, according to an embodiment.

Referring to FIG. 16, a display device 1500 according to an embodiment may include a display as a device for display an image by processing an image signal.

According to an embodiment, the display device 1500 may include a display and may be implemented in various forms, such as a TV , a smart monitor, a mobile phone, a smartphone, a tablet PC, a digital camera, a camcorder, a laptop computer, a desktop, an e-book terminal, a digital broadcasting terminal, a personal digital assistant (PDA), a portable multimedia player (PMP), a navigation device, an MP3 player, a digital video disk (DVD) player, a wearable device, a video wall, a digital signage, a digital information display (DID), a projector display, a refrigerator, a washing machine, etc. Also, the display device 1500 may be a stationary electronic device placed at a fixed location or a mobile electronic device having a portable form, and may be a digital broadcasting receiver capable of receiving digital broadcasts. However, the display device 1500 is not limited thereto.

According to an embodiment, the display device 1500 may display a 360-degree image. According to an embodiment, the display device 1500 may control a stitching area included in the 360-degree image to be displayed at an edge of the display. Accordingly, a viewer or user may be able to view the 360-degree image with improved image quality.

For example, the display device 1500 may receive, from a control device 1550, a user input for changing a region of a spherical 360-degree image 220 to be displayed on the display. In this case, the user input may include an input via 4-way keys included in the control device 1550, a touch-and-drag input, etc.

Referring to FIG. 16, when the display device 1500 receives an input from a right direction key included in the control device 1550 while a 360-degree image corresponding to a first region 1510 is displayed on the display, the display device 1500 may determine whether a second region 1520 located to the right of the first region 1510 includes a stitching area 1525.

When the second region 1520 includes the stitching area 1525, the display device 1500 may display a 360-degree image corresponding to a third region 1530 instead of the second region 1520, such that the stitching area is located at a right edge of the display. However, the present disclosure is not limited thereto.

On the other hand, when the second region 1520 does not include the stitching area 1525, the display device 1500 may display a 360-degree image corresponding to the second region 1520 on the display.

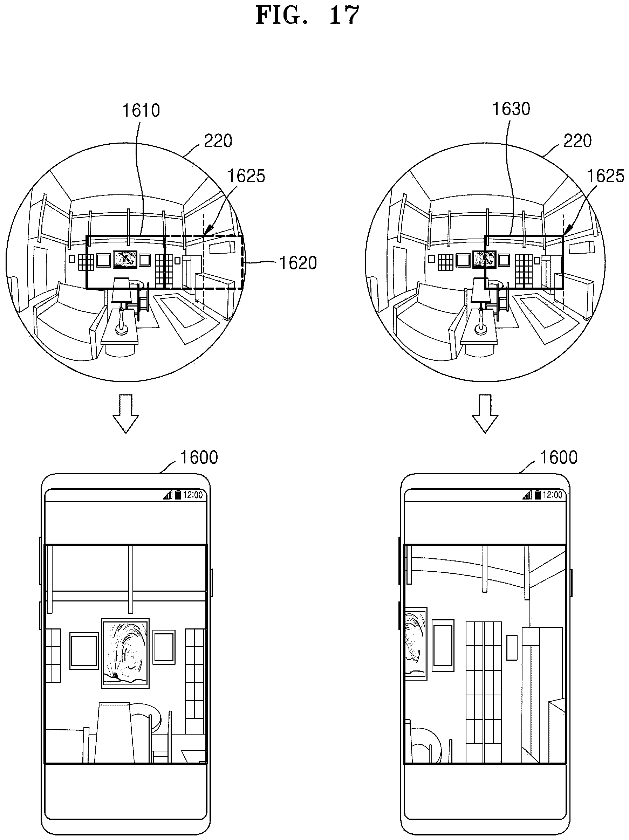

FIG. 17 is a diagram illustrating a display device displaying a 360-degree image, according to an embodiment.

Referring to FIG. 17, a display device according to an embodiment may be a mobile device 1600. For example, according to an embodiment, the mobile device 1600 may include a variety of electronic devices, such as a smartphone, a laptop computer, a desktop, a tablet PC, an e-book terminal, a digital broadcasting terminal, a PDA, a PMP, an MP3 player, a camcorder, a wearable device, etc.

According to an embodiment, the mobile device 1600 may display a 360-degree image on a display. According to an embodiment, the mobile device 1600 may control a stitching area included in the 360-degree image to be displayed at an edge of the display. Accordingly, a user of the mobile device 1600 may be able to view the 360-degree image with improved image quality.

For example, the mobile device 1600 may receive a user input for changing a region of a spherical 360-degree image 220 displayed on the display. In this case, the user input may be an input performed by a user touching the display and dragging in an opposite direction of the region to be changed. Alternatively, the user input may include, but is not limited to, a direction key input.

As shown in FIG. 17, when the user wishes to display a second region 1620 located to the right of the first region 1610 while a 360-degree image corresponding to the first region 1610 is displayed on the display of the mobile device 1600, the user may touch the display and perform a drag input in a left direction.

When receiving the leftward touch-and-drag input from the user, the mobile device 1600 may determine whether the second region 1620 located to the right of the first region 1610 includes a stitching area 1625.

When the second region 1620 includes the stitching area 1625, the mobile device 1600 may display a 360-degree image corresponding to a third region 1630 instead of the second region 1620, such that the stitching area 1625 is located at a right edge of the display. However, the present disclosure is not limited thereto.

On the other hand, when the second region 1620 does not include the stitching area 1625, the mobile device 1600 may display a 360-degree image corresponding to the second region 1620 on the display.

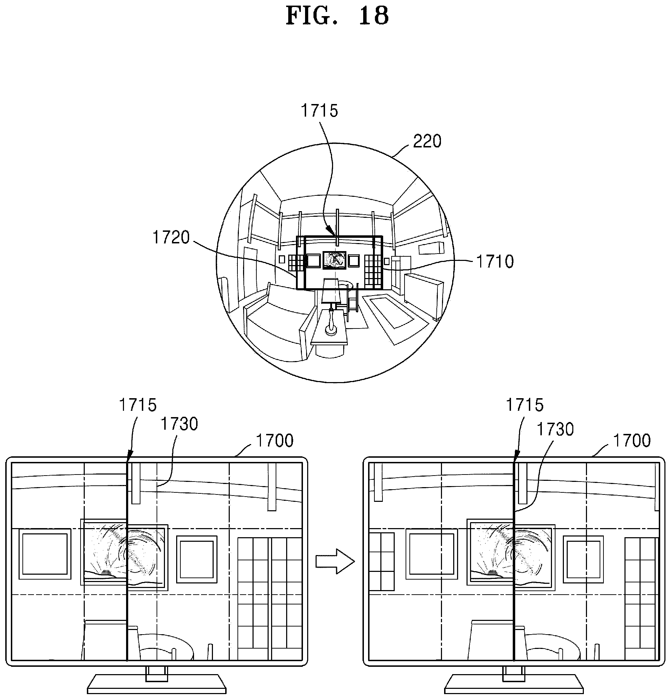

FIG. 18 is a diagram illustrating an example in which a display device displays a 360-degree image, according to an embodiment.

Referring to FIG. 18, a display of a display device 1700 according to an embodiment may include a plurality of panels. In this case, the plurality of panels may constitute a single screen.

According to an embodiment, the display device 1700 may display a 360-degree image on the display including the plurality of panels. In this case, the display device 1700 may control a stitching area included in the 360-degree image to be displayed at a boundary between the plurality of panels. Accordingly, a viewer or user may be able to view the 360-degree image with improved image quality.

As shown in FIG. 18, the display device 1700 may receive a user input for selecting or changing a region of a spherical 360-degree image to be displayed on the display. When a first region 1710 to be displayed on the display includes a stitching area 1715, the display device 1700 may control the stitching area 1715 to be displayed at a boundary between the plurality of panels.

When the display device 1700 displays the first region 1710 on the display, and the stitching area 1715 included in the first region 1710 is closest to a first boundary line 1730 between the display panels, the display device 1700 may display a 360-degree image so that the stitching area 1715 is located at the first boundary line 1730. For example, the display device 1700 may control the display to display a 360-degree image corresponding to a second region 1720 that includes a portion of the first region 1710. However, the present disclosure is not limited thereto.

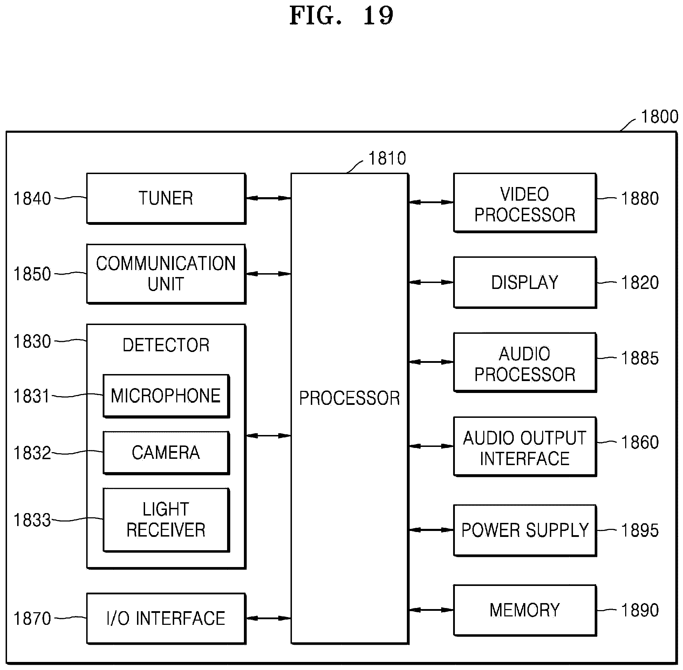

FIG. 19 is a block diagram of a configuration of a display device according to an embodiment.

Referring to FIG. 19, a display device 1800 of FIG. 19 may be an embodiment of the display devices 1500, 1600, and 1700 described with reference to FIGS. 16 to 18.

Referring to FIG. 19, according to an embodiment, the display device 1800 may include a tuner 1840, a processor 1810, a display 1820, a communication unit 1850, a detector 1830, an input/output (I/O) interface 1870, a video processor 1880, an audio processor 1885, an audio output interface 1860, a memory 1890, and a power supply 1895.

For example, the communication unit 1850 may transmit or receive data or signals to or from an external device or a server. For example, the communication unit 1850 may include a Wi-Fi module, a Bluetooth module, an infrared communication module, a wireless communication module, a LAN module, an Ethernet module, a wired communication module, etc. In this case, each communication module may be implemented in the form of at least one hardware chip.

The Wi-Fi module and the Bluetooth module perform communications according to a Wi-Fi method and a Bluetooth method, respectively. When the Wi-Fi module or the Bluetooth module are used, various types of connection information such as a service set identifier (SSID) and a session key may be first transmitted and received, a communication connection may be established using the connection information, and then various types of information may be transmitted and received. The wireless communication module may include at least one communication chip for performing communication according to various communication standards such as ZigBee, 3G, 3GPP, LTE, LTE-A, 4G, 5G, etc.

According to an embodiment, the tuner 1840 may tune and then select only a frequency of a channel desired to be received by the display device 1800 among many radio wave components by performing amplification, mixing, resonance, etc. of a broadcast signal received in a wired or wireless manner. The broadcast signal includes audio, video, and additional information (e.g., an electronic program guide (EPG)).

The tuner 1840 may receive broadcast signals from various sources such as terrestrial broadcasting, cable broadcasting, satellite broadcasting, Internet broadcasting, etc. The tuner 1840 may receive a broadcast signal from a source such as analog broadcasting, digital broadcasting, or the like.

The detector 1830 detects a user's voice, a user's images, or a user's interactions, and may include a microphone 1831, a camera 1832, and a light receiver 1833.

The microphone 1831 may receive a voice uttered by the user. The microphone 1831 may convert the received voice into an electrical signal and output the electrical signal to the processor 1810. The user's voice may include, for example, a voice corresponding to a menu or function of the display device 1800.

The camera 1832 may receive an image (e.g., consecutive frames) corresponding to a user's motion including his or her gesture performed within a recognition range of the camera. The processor 1810 may select a menu displayed on the display device 1800 based on a received motion recognition result or perform control corresponding to the motion recognition result.

The light receiver 1833 receives an optical signal (including a control signal) from an external control device via a light window (not shown) or the like on a bezel of the display 1820. The light receiver 1833 may receive, from the control device, an optical signal corresponding to a user input (e.g., touching, pressing, touch gesture, voice, or motion). A control signal may be extracted from the received optical signal according to control by the processor 1810.

The I/O interface 1870 receives video (e.g., moving images, etc.), audio (e.g., voice, music, etc.), and additional information (e.g., EPG, etc.), from outside the display device 1800. The I/O interface 1870 may include one of a high- definition multimedia interface (HDMI), a mobile high-definition link (MHL), a universal serial bus (USB), a display port (DP), a Thunderbolt, a video graphics array (VGA) port, an red-green-blue (RGB) port, a D-subminiature (D-sub), a digital visual interface (DVI), a component jack, and a PC port.

The processor 1810 controls all operations of the display device 1800 and a flow of signals between the internal components of the display device 1800 and performs a function of processing data.

The processor 1810 may include a single core, a dual core, a triple core, a quad core, or a number of cores equal to multiples thereof. Furthermore, the processor 1810 may include a plurality of processors. For example, the processor 1810 may be implemented as a main processor (not shown) and a sub processor (not shown) operating in a sleep mode.

In addition, the processor 1810 may include at least one of a CPU, a GPU, and a VPU. Alternatively, according to an embodiment, the processor 1810 may be implemented as an SoC that integrates at least one of a CPU, a GPU, and a VPU. Alternatively, the processor 1810 may further include an NPU.

The processor 1810 may include random access memory (RAM) that stores signals or data input from outside the display device 1800 or is used as a storage area corresponding to various operations performed by the display device 1800, read-only memory (ROM) that stores a control program for controlling the display device 1800, and a processor.

According to an embodiment, the memory 1890 may store various pieces of data, programs, or applications for driving and controlling the display device 1800.

Also, a program stored in the memory 1890 may include one or more instructions. A program (one or more instructions) or an application stored in the memory 1890 may be executed by the processor 1810.

According to an embodiment, the processor 1810 may execute one or more instructions stored in the memory 1890 to obtain position information of a stitching area included in a 360-degree image to be displayed.

The processor 1810 may receive or prestore a 360-degree image from an external device. Based on metadata about the 360-degree image, the processor 1810 may obtain position information of a stitching area included in the 360-degree image. Furthermore, the processor 1810 may identify a stitching area included in the 360-degree image by analyzing the 360-degree image and obtain position information about the stitching area.

For example, the processor 1810 may recognize a stitching area based on pixel values of pixels included in the 360-degree image. The processor 1810 may recognize the stitching area by analyzing a distribution of the pixel values of the pixels included in the 360-degree image. The processor 1810 may determine whether a change in pixel values included in the 360-degree image is greater than or equal to a threshold, whether the 360-degree image contains a discontinuous boundary, whether a gradient processed area exists, etc., and recognize the stitching area accordingly.

Furthermore, the processor 1810 may recognize a stitching area by analyzing the 360-degree image by using at least one of machine learning, a neural network, or a deep learning algorithm as a rule-based or Al algorithm.

According to an embodiment, a neural network may be a network trained by learning various criteria, conditions, etc. for recognizing a stitching area, based on various training data. In this case, 'training' may refer to training the neural network to, when various pieces of collected data are input to the neural network, discover or learn on its own a method of analyzing the pieces of input data, a method capable of determining a stitching area based on the pieces of input data, etc. Accordingly, the trained neural network is capable of recognizing the stitching area. In this case, the trained neural network may be prestored in the display device 1800 and may be periodically updated through communication with an external server.

When the stitching area is recognized in the 360-degree image, the processor 1810 may obtain position information about the stitching area.

According to an embodiment, the processor 1810 may execute one or more instructions stored in the memory 1890 to control a stitching area included in a 360-degree image to be displayed at an edge of the display, based on position information of the stitching area. Alternatively, when the display consists of a plurality of panels, the processor 1810 may control a stitching area included in a 360-degree image to be displayed at a boundary between the plurality of panels. However, the present disclosure is not limited thereto.

The video processor 1880 processes video data received by the display device 1800. The video processor 1880 may perform various types of image processing, such as decoding, scaling, noise removal, frame rate conversion, resolution conversion, etc. on the video data.

According to an embodiment, the display 1820 generates a driving signal by converting an image signal, a data signal, an on-screen display (OSD) signal, a control signal, etc. processed by the processor 1810, and display an image according to the driving signal.

According to an embodiment, the display 1820 may be implemented as a plasma display panel (PDP), a liquid crystal display (LCD), an organic light-emitting diode (OLED) display, a flexible display, or the like, and may also be implemented as a 3D display. Furthermore, the display 1820 may be formed as a touch screen to serve as an input device as well as an output device.

According to an embodiment, the display 1820 may display a stitching area included in a 360-degree image at an edge of the display. Alternatively, when the display consists of a plurality of panels, the display may display a stitching area at a boundary between the plurality of panels. However, the present disclosure is not limited thereto.

The audio processor 1885 processes audio data. The audio processor 1885 may perform various types of processing, such as decoding, amplification, noise removal, etc., on the audio data. Moreover, the audio processor 1885 may include a plurality of audio processing modules to process audio corresponding to a plurality of pieces of content.

The audio output interface 1860 outputs audio contained in a broadcast signal received via the tuner 1840 according to control by the processor 1810. The audio output interface 1860 may output audio (e.g., a voice and a sound) input via the communication unit 1850 or the I/O interface 1870. Furthermore, the audio output interface 1860 may output audio stored in the memory 1890 according to control by the processor 1810. The audio output interface 1860 may include at least one of a speaker, a headphone output terminal, or a Sony/Phillips Digital Interface (S/PDIF) output terminal.

The power supply 1895 supplies, according to control by the processor 1810, power input from an external power source to the internal components of the display device 1800. The power supply 1895 may also supply, according to control by the processor 1810, power output from one or more batteries (not shown) located within the display device 1800 to the internal components.

The memory 1890 may store various pieces of data, programs, or applications for driving and controlling the display device 1800 according to control by the processor 1810. Although not shown, the memory 1890 may include a broadcasting receiving module, a channel control module, a volume control module, a communication control module, a voice recognition module, a motion recognition module, a light receiving module, a display control module, an audio control module, an external input control module, a power control module, a power control module for an external device connected wirelessly (e.g., via Bluetooth), a voice database (DB), or a motion DB. The modules and DBs of the memory 1890 not shown in FIG. 19 may be implemented in the form of software in order to perform a broadcast reception control function, a channel control function, a volume control function, a communication control function, a voice recognition function, a motion recognition function, a light receiving control function, a display control function, an audio control function, an external input control function, a power control function, or a power control function for the external device connected wirelessly (e.g., via Bluetooth). The processor 1810 may perform the respective functions by using the software stored in the memory 1890.

Moreover, the block diagram of the display device 1800 illustrated in FIG. 19 is a block diagram for an embodiment. The components in the block diagram may be integrated, added, or omitted according to specifications of the display device 1800 that is actually implemented. In other words, two or more components may be combined into a single component, or a single component may be subdivided into two or more components when necessary. Furthermore, functions performed by each block are intended to describe embodiments, and a specific operation or device related to the functions does not limit the scope of the present disclosure.

A projection apparatus for projecting an image, according to an embodiment, may include a projection unit.

According to an embodiment, the projection apparatus may include a memory storing one or more instructions and at least one processor configured to execute the one or more instructions.

The at least one processor may be configured to execute the one or more instructions to obtain spatial information of a space onto which the image is to be projected.

The at least one processor may be configured to execute the one or more instructions to obtain position information of a stitching area included in the image.

The at least one processor may be configured to execute the one or more instructions to control the projection unit to project the image according to projection information of the image, which is determined based on the spatial information of the space and the position information of the stitching area.

The at least one processor may be configured to execute the one or more instructions to obtain the position information of the stitching area based on values of pixels included in the image.

The at least one processor may be configured to execute the one or more instructions to obtain the position information of the stitching area based on metadata about the image.

According to an embodiment, the projection apparatus may include an image sensor and a depth sensor.

The at least one processor may be configured to execute the one or more instructions to obtain an image of the space captured by the image sensor.

The at least one processor may be configured to execute the one or more instructions to obtain depth information of the space from the depth sensor.

The at least one processor may be configured to execute the one or more instructions to obtain, based on the captured image and the depth information, information about an edge included in the space.

The at least one processor may be configured to execute the one or more instructions to determine, based on the position information of the stitching area and the spatial information of the space, the projection information of the image so that the stitching area in the image is displayed at the edge included in the space.

The at least one processor may be configured to execute the one or more instructions to determine at least one of a projection direction, a projection position, and a projection size of the image.

The at least one processor may be configured to execute the one or more instructions to receive a user input for selecting, from the image, a region to be displayed on the space.

The at least one processor may be configured to execute the one or more instructions to determine the projection information such that a stitching area included in the selected region is projected onto an edge of the space.

The space may be composed of a plurality of faces.

The at least one processor may be configured to execute the one or more instructions to receive a user input for selecting, from the image, a region to be displayed on a first face among the plurality of faces included in the space.

The at least one processor may be configured to execute the one or more instructions to determine the projection information such that a stitching area included in the selected region is projected onto an edge formed by the face and a second face adjacent to the first face.

The at least one processor may be configured to execute the one or more instructions to
identify a degree of deterioration for the stitching area in the image.

The at least one processor may be configured to execute the one or more instructions to determine the projection information of the image by comparing the degree of deterioration with a preset threshold.

The at least one processor may be configured to execute the one or more instructions to determine the projection information of the image such that, when the degree of deterioration is greater than or equal to the threshold, the stitching area is displayed at the edge included in the screen.

The at least one processor may be configured to execute the one or more instructions to control the projection unit to project a guide message indicating that a region of the image to be displayed on the space has been adjusted according to a position of the stitching area included in the image.

An operating method of a projection apparatus for projecting an image, according to an embodiment, may include obtaining spatial information of a space onto which the image is to be projected.

According to an embodiment, the operating method of the projection apparatus may include obtaining position information of a stitching area included in the image.

According to an embodiment, the operating method of the projection apparatus may include projecting the image according to projection information of the image, which is determined based on the spatial information and the position information of the stitching area.

The obtaining of the position information of the stitching area included in the image may include obtaining the position information of the stitching area based on values of pixels included in the image.

The obtaining of the position information of the stitching area included in the image may include obtaining the position information of the stitching area based on metadata about the image.

The obtaining of the spatial information of the space onto which the image is to be projected may include obtaining an image of the space captured by an image sensor.

The obtaining of the spatial information of the space onto which the image is to be projected may include obtaining depth information of the space from the depth sensor.

The obtaining of the spatial information of the space onto which the image is to be projected may include obtaining, based on the captured image and the depth information, information about edges included in the space.

The projecting of the image according to projection information of the image may include determining, based on the position information of the stitching area and the spatial information, the projection information of the image so that the stitching area in the image is displayed at the edge included in the space.

The projecting of the image according to the projection information of the image may include determining at least one of a projection direction, a projection position, and a projection size of the image.

According to an embodiment, the operating method of the projection apparatus may include receiving a user input for selecting a region to be displayed on the space from the image.

The projecting of the image according to the projection information of the image may include determining the projection information such that a stitching area included in the selected region is projected onto an edge of the space.

A projection apparatus and operating method thereof, according to an embodiment, may control a stitching area included in a 360-degree image to be projected onto an edge included in a screen, thereby allowing a viewer watching the 360-degree image to perceive less deterioration or distortion of the stitching area than is actually present.

Accordingly, the viewer may view the 360-degree image projected on a multi-surface screen with optimal quality.

An operating method of a projection apparatus, according to an embodiment, may be implemented in the form of program commands that may be performed by various types of computers, and may be recorded on computer-readable recording media. The computer-readable recording media may include program commands, data files, data structures, etc. either alone or in combination. The program commands recorded on the computer-readable recording media may be designed and configured specially for the present disclosure or may be known to and be usable by those of ordinary skill in the art of computer software. Examples of the computer-readable recording media include magnetic media such as hard disks, floppy disks, and magnetic tapes, optical media such as compact disk ROM (CD-ROM) and digital versatile disks (DVDs), magneto-optical media such as floptical disks, and hardware devices that are specially configured to store and perform program commands, such as ROM, RAM, flash memory, etc. Examples of program commands include not only machine code such as that created by a compiler but also high-level language code that may be executed by a computer using an interpreter or the like.

In addition, at least one of an operating method of a projection apparatus and an operating method of a display device according to disclosed embodiments may be included in a computer program product when provided. The computer program product may be traded, as a product, between a seller and a buyer.

The computer program product may include a software program and a computer-readable storage medium having the software program stored thereon. For example, the computer program product may include a product (e.g., a downloadable application) in the form of a software program electronically distributed by a manufacturer of an electronic device or through an electronic market (e.g., Google Play Store ^{™}, and App Store ^{™}). For such electronic distribution, at least a part of the software program may be stored on the storage medium or may be temporarily generated. In this case, the storage medium may be a storage medium of a server of the manufacturer, a server of the electronic market, or a relay server for temporarily storing the software program.

In a system consisting of a server and a client device, the computer program product may include a storage medium of the server or a storage medium of the client device. Alternatively, in a case where there is a third device (e.g., a smartphone) communicatively connected to the server or client device, the computer program product may include a storage medium of the third device. Alternatively, the computer program product may include a software program itself that is transmitted from the server to the client device or the third device or that is transmitted from the third device to the client device.

In this case, one of the server, the client device, and the third device may execute the computer program product to perform methods according to disclosed embodiments. Alternatively, at least two of the server, the client device, and the third device may execute the computer program product to perform the methods according to the disclosed embodiments in a distributed manner.

For example, the server (e.g., a cloud server, an Al server, or the like) may execute the computer program product stored therein to control the client device communicatively connected to the server to perform the methods according to the disclosed embodiments.

While embodiments have been particularly described above, the embodiments are not to be construed as limiting the scope of the present disclosure, and various modifications and improvements made by those of ordinary skill in the art based on a basic concept of the present disclosure also fall within the scope of the present disclosure as defined by the following claims.

## Claims

1. A projection apparatus (100) for projecting an image, the projection apparatus comprising:
a projection unit (140);
a memory (130) storing one or more instructions; and
at least one processor (120) configured to execute the one or more instructions,
wherein the at least one processor (120) is configured to execute the one or more instructions to
obtain spatial information of a space onto which the image is to be projected,
obtain position information of a stitching area included in the image, and
control the projection unit to project the image according to projection information of the image, which is determined based on the spatial information and the position information of the stitching area.

2. The projection apparatus of claim 1, wherein the at least one processor (120) is further configured to execute the one or more instructions to obtain the position information of the stitching area based on values of pixels included in the image.

3. The projection apparatus of claim 1 or 2, wherein the at least one processor (120) is further configured to execute the one or more instructions to obtain the position information of the stitching area based on metadata about the image.

4. The projection apparatus of any one of claims 1 to 3, wherein
the projection apparatus (100) further comprises
an image sensor and a depth sensor, and
the at least one processor (120) is further configured to execute the one or more instructions to obtain an image of the space captured by the image sensor, obtain depth information of the space from the depth sensor, and obtain, based on the captured image and the depth information, information about an edge included in the space.

5. The projection apparatus of claim 4, wherein the at least one processor (120) is further configured to execute the one or more instructions to determine, based on the position information of the stitching area and the spatial information , the projection information of the image so that the stitching area in the image is displayed at the edge included in the space.

6. The projection apparatus of any one of claims 1 to 5, wherein the at least one processor (120) is further configured to execute the one or more instructions to determine at least one of a projection direction, a projection position, and a projection size of the image.

7. The projection apparatus of any one of claims 1 to 6, wherein
the at least one processor (120) is further configured to execute the one or more instructions to
receive a user input for selecting, from the image, a region to be displayed on the space, and
determine the projection information such that a stitching area included in the selected region is projected onto an edge of the space.

8. The projection apparatus of any one of claims 1 to 7, wherein the space is composed of a plurality of faces.

9. The projection apparatus of claim 8, wherein
the at least one processor (120) is further configured to execute the one or more instructions to
receive a user input for selecting, from the image, a region to be displayed on a first face among the plurality of faces included in the space, and determine the projection information such that a stitching area included in the selected region is projected onto an edge formed by the first face and a second face adjacent to the first face.

10. The projection apparatus of any one of claims 1 to 9, wherein
the at least one processor (120) is further configured to execute the one or more instructions to
identify a degree of deterioration of the stitching area in the image, and
determine the projection information of the image by comparing the degree of deterioration with a preset threshold.

11. The projection apparatus of claim 10, wherein the at least one processor (120) is further configured to execute the one or more instructions to determine the projection information of the image such that, when the degree of deterioration is greater than or equal to the threshold, the stitching area is displayed at the edge included in the screen.

12. The projection apparatus of any one of claims 1 to 11, wherein the at least one processor (120) is further configured to execute the one or more instructions to control the projection unit to project a guide message indicating that a region of the image to be displayed on the space has been adjusted according to a position of the stitching area included in the image.

13. An operating method of a projection apparatus for projecting an image, the operating method comprising:
obtaining spatial information of a space onto which the image is to be projected;
obtaining position information of a stitching area included in the image; and
controlling the projection unit to project the image according to projection information of the image, which is determined based on the spatial information and the position information of the stitching area.

14. The operating method of claim 13, wherein the obtaining of the position information of the stitching area included in the image comprises obtaining the position information of the stitching area based on values of pixels included in the image.

15. A computer-readable recording medium having stored therein a program for performing the operating method of claim 13 or 14.
